# FASCICULE DE BREVET EUROPEEN

(11) **EP 1 309 419 B1**
(45) Date de publication et mention de la délivrance du brevet: **19.04.2006**
(21) Numéro de dépôt: 01963067.2
(22) Date de dépôt: 07.08.2001
(51) Int. Cl.: B23D 63/18

(54) **DISPOSITIF POUR LE PLANAGE DE LAMES DE SCIES**
RICHTMASCHINE FÜR SÄGEBLÄTTER
DEVICE FOR PLANISHING SAW BLADES

(30) Priorité: 07.08.2000 FR 0010398
(43) Date de publication de la demande: 14.05.2003
(73) Titulaire: Martin, Aimé, 21330 Laignes (FR)
(72) Inventeur: Martin, Aimé, 21330 Laignes (FR)
(74) Mandataire: Honoré, Anne-Claire
(86) Numéro de dépôt international: PCT/FR2001/002564
(87) Numéro de publication internationale: WO 2002/011935

(56) Documents cités:
- EP-A- 0 796 693
- DE-A- 4 214 784
- DE-C- 45 230
- FR-A- 928 772
- US-A- 4 852 430
- PATENT ABSTRACTS OF JAPAN vol. 1997, no. 03, 31 mars 1997 (1997-03-31) & JP 08 290326 A (IIDA YOSHIKAZU), 5 novembre 1996 (1996-11-05)

## Description

La présente invention concerne le domaine de l'entretien des lames de scie et a pour objet un dispositif à planer lesdites lames.

Dans le domaine des scieuses industrielles, on connaît bien des machines à scier dites de "tête" ou de "reprise" utilisant des lames dites à "ruban" positionnées entre deux volants cylindriques placés l'un au-dessus de l'autre, la lame étant maintenue verticalement et entraînée dans un mouvement alternatif vertical par lesdits volants. Outre l'usure des dents, la coupe du bois provoque des déformations du corps de la lame qui perd ainsi sa planéité diminuant sensiblement le rendement et la qualité de la coupe. En effet, le bois présente des différences de structures telles que des noeuds naturels plus denses, des cailloux ou des éclats de métal incrustés provenant de l'abattage des arbres qui, outre les efforts mécaniques appliqués sur les lames par les scieuses, déforment le corps des lames.

Afin de maintenir un rendement et une qualité de coupe acceptable, les lames à ruban des scieuses sont régulièrement remplacées, tous les quatre à cinq jours d'utilisation pour être planées, les lames aplanies étant alors réutilisées avant d'être replanées et ainsi de suite jusqu'à ce qu'elles soient définitivement inutilisables.

A cet effet, on connaît bien des dispositifs à planer les lames de scies constitués d'un galet creux et d'un galet bombé motorisés entre lesquels défile la lame à planer ; c'est le cas, par exemple, du brevet allemand DE 4.214.784 (état de la technique le plus proche) décrivant un dispositif à planer les lames de scie à galets. Le dispositif comprend des galets creux et des galets bombés motorisés entre lesquels défile la lame à planer, lesdits galets étant avantageusement montés sur un châssis qui est apte à se déplacer transversalement au défilement de la lame pour couvrir toute sa surface. Le dispositif comprend, par ailleurs, des moyens de détection des déformations positionnés en amont des galets et aptes à se déplacer transversalement pour adapter la pression exercée entre le galet creux et le galet bombé, la pression augmentant avec l'importance des déformations décelées. Toutefois, malgré la grande précision des moyens de détection de ces dispositifs, il est particulièrement difficile d'adapter la pression entre les galets suivant les déformations de sorte que les lames traitées par ces dispositifs présentent encore, après plusieurs passages entre les galets, des déformations résiduelles qui altèrent le rendement de coupe.

On connaît, par ailleurs, des machines à planer les lames de scies dit "à marteaux" ; c'est le cas, par exemple, du brevet français FR 928 772 décrivant une machine à planer les lames de scies constitué d'une table sur la face supérieure de laquelle repose la lame de scie qui est avancée de façon intermittente sous la commande de tambours garnis de caoutchouc. La machine comprend, par ailleurs, des marteaux positionnés sur une ligne longitudinale à la direction de déplacement de la lame, lesdits marteaux étant sollicités de bas en haut par l'action d'un ressort qui se trouve abaissé seulement lorsqu'une pression d'air suffisante est exercée sur les pistons qui terminent chacun des marteaux. L'air sous pression, amenée par une tuyauterie, est distribuée au moyen d'un tiroir commandé par un électroaimant à chaque cylindre dans lequel s'étend le piston d'un marteau. Pour que chaque marteau fonctionne seulement lorsqu'une bosse de la lame se trouve au dessous de lui, la machine comporte des moyens de détection positionnés sur une ligne longitudinale à la direction de déplacement de la lame et disposés sur un chariot mobile apte à effectuer des mouvements de va et vient suivant une direction transversale audit déplacement de la lame, lesdits mouvements de va et vient du chariot étant utilisés pour faire tourner de façon intermittente les tambours afin d'entraîner la lame de scie suivant une direction longitudinale.

Ce type de machine à planer les lames de scies présente l'inconvénient de fonctionner en discontinu rendant l'opération de planage de la lame particulièrement long et, par conséquent, onéreux. On notera que, les moyens d'actionnement des marteaux étant pneumatiques, ils présentent une inertie importante incompatible avec un planage en continu.

L'un des buts de l'invention est donc de remédier à tous ces inconvénients en proposant un dispositif pour le planage des lames de scies à ruban entièrement automatique procurant un traitement de grande précision.

A cet effet, le dispositif à planer une lame de scie à ruban ou analogue, comprenant des moyens d'entraînement continu de la lame assurant son positionnement à plat au moins sous une zone de travail, des moyens de détection des déformations de la lame et des moyens de planage dans la zone de travail, positionnés en aval desdits moyens de détection est remarquable en ce que les moyens de détection sont constitués de détecteurs de position solidaires d'une table positionnée sous la lame de telle sorte que les têtes desdits détecteurs soient sensiblement au niveau de la face supérieure de la table au droit de la face inférieure de la lame, lesdits détecteurs étant régulièrement espacés sur une ligne transversale à la direction de défilement de la lame, et en ce que les moyens de planage sont constitués de marteaux coopérant avec une enclume positionnée sous la lame de scie, préférentiellement en nombre identique aux détecteurs et constitués de barres préférentiellement parallélépipédiques s'étendant perpendiculairement à la lame au droit de l'enclume et maintenus dans leur position de repos au dessus de la lame par des moyens de rappel permettant à la lame de défiler entre l'enclume et les têtes des marteaux, ces derniers étant régulièrement espacés dans l'axe des détecteurs et actionnés par des moyens mécaniques respectivement commandés par des détecteurs de position de telle sorte que, lorsqu'un détecteur décèle une déformation de la surface du corps de la lame, le marteau correspondant audit détecteur soit actionné pour aplanir ladite déformation.

On comprend bien que la totalité de la surface de la lame est en principe planée en un seul passage de la lame sous les marteaux tout en obtenant un planage de grande précision.

Selon une caractéristique particulièrement avantageuse du dispositif selon l'invention, la table comprend sur sa face supérieure en regard de la face inférieure de la lame des rainures qui s'étendent, de préférence, parallèlement à la direction de défilement de la lame pour réduire ses frottements sur la table et éviter l'encrassement des têtes des détecteurs de position.

D'autres avantages et caractéristiques ressortiront mieux de la description qui va suivre, de plusieurs variantes d'exécution, données à titre d'exemples non limitatifs, du dispositif de planage conforme à l'invention, en référence aux dessins annexés sur lesquels:
- la figure 1 est une vue schématique en coupe longitudinale du dispositif à planer les lames de scie suivant l'invention,
- la figure 2 est une vue schématique partielle de dessus du dispositif représenté sur la figure 1,
- la figure 3 est une vue de dessus des moyens de détection du dispositif conforme à l'invention,
- la figure 4 est une vue en coupe longitudinale des moyens de détection du dispositif selon l'invention,
- la figure 5 est une vue en coupe transversale des moyens de détection du dispositif conforme à l'invention,
- la figure 6 est une vue en coupe longitudinale d'une variante d'exécution des moyens de détection du dispositif selon l'invention,
- la figure 7 est une vue en coupe longitudinale schématique des moyens de planage du dispositif conforme à l'invention.

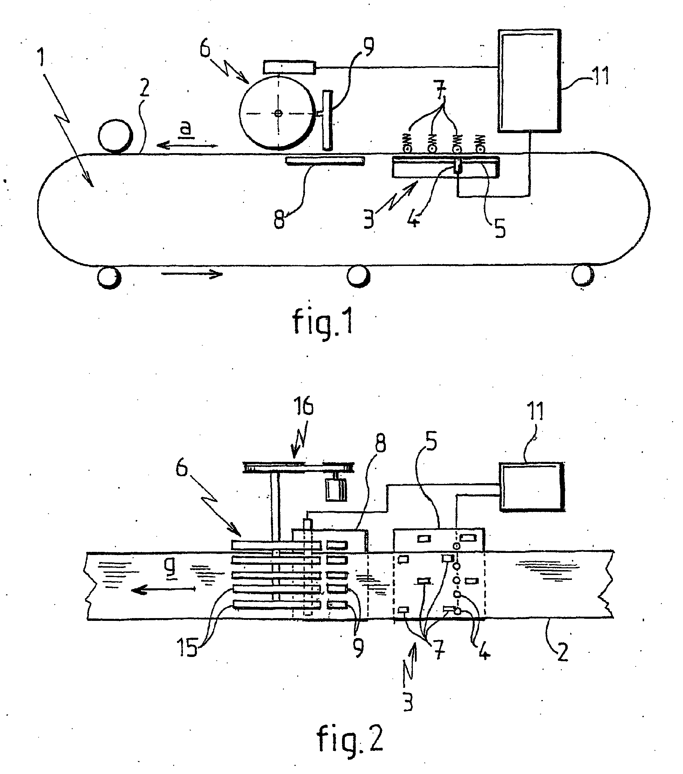

Le dispositif à planer une lame de scie, en référence à la figure 1, est constitué de moyens classiques d'entraînement continu 1 de la lame 2 assurant son positionnement à plat au moins sous une zone de travail, c'est-à-dire que la lame 2 s'étend horizontalement en formant une surface plane, ladite lame 2 défilant dans cet exemple de réalisation dans le sens inverse des aiguilles d'une montre, de moyens de détection 3 des déformations des lames 2 constitués de détecteurs de position 4 solidaires d'une table 5 positionnée sous la lame 6 de telle sorte que les têtes desdits détecteurs 4 soient sensiblement au niveau de la face supérieure de la table 5 au droit de la face inférieure de la lame 2 et de moyens de planage 6 positionnés en aval desdits moyens de détection 3. La lame 2 est, par ailleurs, maintenue globalement plane au-dessus de la table 5 par des galets presseurs 7 munis de ressorts. Les moyens de planage 6 sont constitués d'une enclume 8 formée par une plaque métallique, par exemple, et positionnée sous la lame de scie 2, et de marteaux 9 constitués de barres parallélépipédiques qui s'étendent perpendiculairement à la surface de la lame 2 de telle sorte qu'elle puisse défiler entre l'enclume 8 et les têtes de marteaux 9, lesdits marteaux 9 étant actionnés par des moyens d'entraînement que l'on décrira en détail plus loin.

Il va de soi que la table 5 des moyens de détection 3 et les moyens de planage 6 sont solidaires d'un bâti, non représenté sur les figures, qui peut avantageusement être le même que celui des moyens d'entraînement 1 de la lame 2, par exemple.

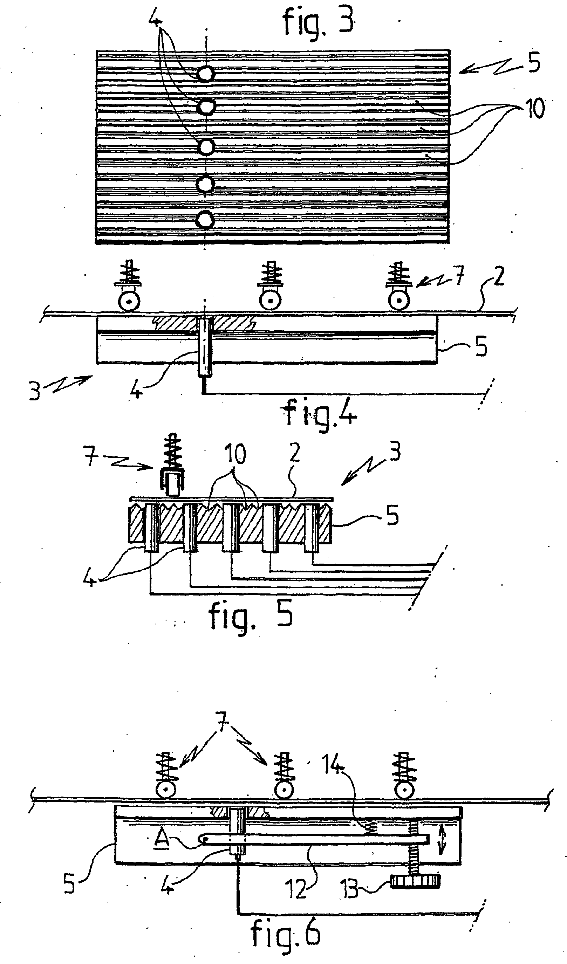

En référence aux figures 2 à 5, les détecteurs de position 4 solidaires de la table 5, qui dans cet exemple particulier de réalisation comprend six détecteurs 4, sont régulièrement espacés sur une ligne transversale au sens de défilement de la lame 2 afin de couvrir toute sa surface quelque soit ses dimensions. En référence aux figures 3 et 5, la table 5 comprend, par ailleurs, sur sa face supérieure en regard de la face inférieure de la lame 2 des rainures 10 ou analogues, ayant par exemple une section en V, qui s'étendent avantageusement parallèlement à la direction de défilement de la lame 2 afin d'en réduire les frottements sur la table 5 et éviter l'encrassement des têtes des détecteurs de position 4.

Il est bien évident que la table 5 peut comprendre un nombre quelconque de détecteurs de position 4 et que les rainures 10 peuvent présenter une forme quelconque et s'étendre suivant une direction quelconque.

En référence à la figure 2, le dispositif comprend un nombre identique de marteaux 9 et de détecteurs de position 4, précisément six dans cet exemple particulier de réalisation ; les marteaux 9 sont positionnés sur une ligne transversale au sens de défilement de la lame 2, c'est-à-dire parallèlement aux détecteurs et l'espace qui sépare deux marteaux 9 voisins est égal à l'espace qui sépare deux détecteurs 4 voisins. Par ailleurs, les moyens d'entraînement de chaque marteau 9 sont connectés respectivement à un détecteur de position 4 par l'intermédiaire d'un boîtier électronique 11 de telle sorte que, lorsqu'un détecteur 4 décèle une déformation de la surface du corps de la lame 2 supérieure à un seuil de déformation prédéterminé dans le boîtier électronique 11, le marteau 9 correspondant à la zone dudit détecteur 4 soit actionné pour aplanir ladite déformation comme on le verra plus loin.

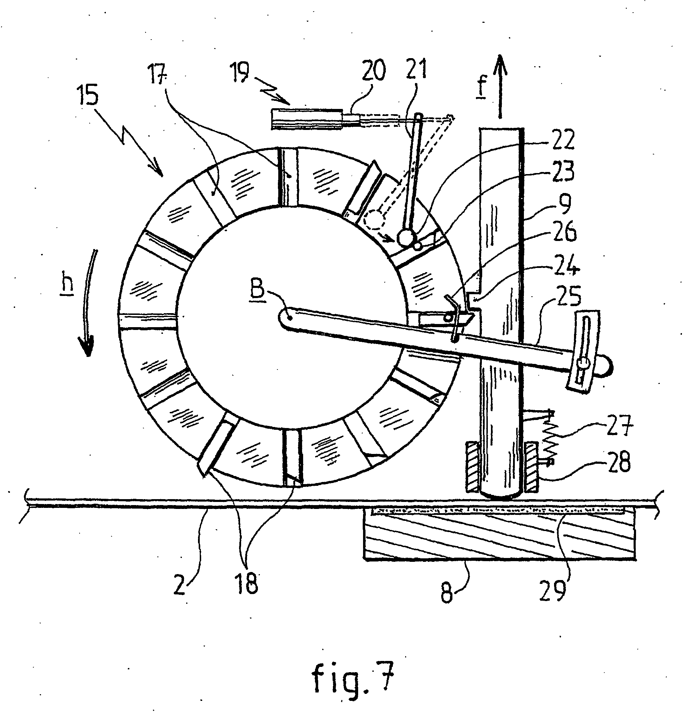

Selon une variante d'exécution particulièrement avantageuse du dispositif conforme à l'invention, en référence à la figure 6, la table 5 comprend des moyens de positionnement vertical de la tête de chaque détecteur 4 par rapport à la surface supérieure de ladite table 5 afin de faire varier la sensibilité des détecteurs 4 et ainsi obtenir un planage d'une plus grande précision. Ces moyens de positionnement sont constitués d'un bras 12 dont une première extrémité pivote autour d'un axe A solidaire de la table 5 et dont l'autre extrémité comprend une vis de réglage 13 prenant appui sur la face inférieure de la table 5. Le détecteur 4 est solidarisé au bras par un pivot entre les deux extrémités dudit bras 12 maintenu dans sa position initiale de repos par un ressort 14 dont les extrémités sont fixées respectivement à la face inférieure de la table 5 et au bras 12.

Par ailleurs, en référence aux figures 2 et 7, les moyens d'entraînement de chaque marteau 9 sont constitués d'une roue 15 entraînée en rotation par un motoréducteur 16 par exemple, autour d'un axe B globalement perpendiculaire à la direction de défilement de la lame 2. Chaque roue 15 comprend des logements radiaux 17 débouchant à sa périphérie dans lesquels sont positionnés des taquets 18 aptes à occuper une première position de repos où ils sont à l'intérieur de leur logement 17 et une seconde position d'entraînement où ils font saillie à la périphérie de la roue 15. Afin d'amener lesdits taquets 18 depuis leur première position de repos jusqu'à leur seconde position d'entraînement en saillie à la périphérie de la roue 15, le dispositif comprend pour chaque détecteur 4 une bobine électromagnétique 19 commandée par ledit détecteur 4, et plus précisément commandée par le boîtier électronique 11 représentée sur la figure 2, dont la tige 20 est articulée à une première extrémité d'un bras pivotant 21 muni à son autre extrémité d'un galet 22 coopérant avec des roulettes 23 solidaires de chaque taquet 18 d'une roue 15. Lorsqu'un taquet, 18 est en position d'entraînement en saillie à la périphérie de la roue 15, il coopère avec une excroissance 24 solidaire du marteau 9 correspondant à la roue 15 pour entraîner ledit marteau 9 en translation suivant l'axe vertical, comme l'indique la flèche f de la figure 7, jusqu'à ce que le taquet 18 soit ramené dans sa première position de repos par des moyens appropriés de retour ce qui libère le marteau 9 qui tombe par son propre poids sur la lame 2 défilant en dessous. Les moyens de retour du taquet 18 sont par exemple constitués d'un levier 25 dont une extrémité est centrée sur l'axe de rotation B de la roue 15 et l'autre est réglable angulairement par une vis et un écrou papillon se déplaçant dans une glissière en arc de cercle, par exemple ; le levier 25 est à cet effet muni d'un chemin de came 26 coopérant avec les roulettes 23 des taquets 18 pour les amener depuis leur seconde position d'entraînement jusqu'à leur première position de repos.

De plus, chaque marteau 9 comprend un moyen automatique de rappel comme, par exemple, un ressort 27 dont les extrémités sont respectivement solidaires du marteau 9 et d'un carter 28 dans lequel s'étendent les marteaux 9, maintenant les marteaux 9 dans une position de repos au-dessus de la lame 2 après une frappe. Par ailleurs, la tête de chaque marteau 9 est avantageusement bombée pour ne pas laisser d'empreinte sur la lame 2 et la face supérieure de l'enclume 8 est avantageusement revêtue d'une matière souple 29 telle que la matière connue sous la marque commerciale "ISOREL", par exemple, afin d'absorber une partie de l'énergie transmise par les marteaux 9 lors de leur frappe évitant ainsi qu'ils ne rebondissent sur l'enclume 8.

On expliquera maintenant le fonctionnement du dispositif pour le planage d'une lame de scie à ruban suivant l'invention en référence aux figures 2 et 7.

En référence à la figure 2, la lame de scie 2 qui présente dans cet exemple non limitatif une largeur inférieure à la largeur de la table 5 et des moyens de planage 6, est entraînée de la droite vers la gauche, comme l'indique la flèche g, et passe au-dessus de la table 5 où les détecteurs de position 4 mesurent la distance séparant leur tête du corps de ladite lame 2. Dès que cette distance est supérieure à une valeur prédéterminée et enregistrée dans le boîtier électronique 11, indiquant une déformation de la lame 2, le boîtier 11 commande les moyens de planage 6 positionnés en aval de la table 5. Le boîtier 11 actionne ainsi la bobine électromagnétique 19 correspondant au détecteur 4 qui a décelé la déformation et dont la tige 20 provoque le déplacement du galet 22 qui prend appui sur la roulette.23 du taquet 18, représenté en trait plein sur la figure 7, pour l'amener depuis sa première position de repos jusqu'à sa seconde position d'entraînement en saillie à la périphérie de la roue 15. Le taquet 18 effectue alors une rotation quasi-complète dans le sens inverse des aiguilles d'une montre qui correspond au sens de rotation de la roue 15 comme l'indique la flèche h, pour finalement se positionner sous l'excroissance 24 du marteau 9 soulevant ainsi ledit marteau 9 comme l'indique la flèche f. La roulette 23 du taquet 18 s'engage alors dans le chemin de came 26 du bras 25 qui ramène le taquet 18 dans sa première position de repos où il est à l'intérieur de son logement 16 libérant ainsi le marteau 9 qui tombe, sous l'effet de son propre poids, sur la lame 2 à l'emplacement de la déformation détectée par le détecteur 4 pour la supprimer. Le marteau 9 revient alors dans sa position initiale de repos au-dessus de la lame 2 prêt pour une nouvelle frappe. Le motoréducteur 16 entraînant simultanément et dans le même sens toutes les roues 15, les marteaux 9 peuvent être actionnés simultanément pour corriger respectivement les déformations des zones correspondant à chacun des détecteurs de position 4 limitant ainsi le nombre de passage de la lame 2 sous les moyens de planage 6.

Enfin, il est bien évident que la vitesse de rotation des roues 15 qui dépend de la vitesse de défilement de la lame 2 pourra aisément être adaptée pour que le marteau 9 correspondant à une déformation de la lame 2 décelée par un détecteur 4 tombe à l'endroit précis de la déformation.

## Revendications

1. Dispositif à planer une lame de scie à ruban (2) ou analogue, comprenant des moyens d'entraînement continu (1) de la lame (2) assurant son positionnement à plat au moins sous une zone de travail, des moyens de détection (3) des déformations de la lame (2) et des moyens de planage (6) dans la zone de travail positionnés en aval desdits moyens de détection (3) **caractérisé en ce que** les moyens de détection (3) sont constitués de détecteurs de position (4) solidaires d'une table (5) positionnée sous la lame (2) de telle sorte que les têtes desdits détecteurs (4) soient sensiblement au niveau de la face supérieure de la table (5) au droit de la face inférieure de la lame (2), lesdits détecteurs (4) étant régulièrement espacés sur une ligne transversale à la direction de défilement de la lame (2), et **en ce que** les moyens de planage (6) sont constitués de marteaux (9) coopérant avec une enclume (8) positionnée sous la lame de scie (2), préférentiellement en nombre identique aux détecteurs (4) et constitué de barres préférentiellement parallélépipédiques s'étendant perpendiculairement à la lame (2) au droit de l'enclume (8) et maintenus dans leur position de repos au-dessus de la lame (2) par des moyens de rappel (27) permettant à la lame de défiler entre l'enclume (8) et les têtes des marteaux (9), ces derniers étant régulièrement espacés dans l'axe des détecteurs (4) et actionnés par des moyens d'entraînement mécaniques respectivement commandés par les détecteurs de position (4) de telle sorte que, lorsqu'un détecteur (4) décèle une déformation de la surface du corps de la lame (2), le marteau (9) correspondant audit détecteur (4) soit actionné pour aplanir ladite déformation.

2. Dispositif selon la revendication précédente **caractérisé en ce que** la table (5) comprend sur sa face supérieure en regard de la face inférieure de la lame (2) des rainures (10) ou analogues.

3. Dispositif selon la revendication 2 **caractérisé en ce que** les rainures (10) s'étendent parallèlement à la direction de défilement de la lame (2).

4. Dispositif selon l'une quelconque des revendications 1 à 3 **caractérisé en ce que** la table (5) comprend des moyens de positionnement de la tête de chaque détecteur (4) par rapport à la surface supérieure de ladite table (5).

5. Dispositif selon la revendication 4 **caractérisé en ce que** les moyens de réglage sont constitués d'un bras (12) dont une première extrémité pivote autour d'un axe A solidaire de la table (5) et dont l'autre extrémité comprend une vis de réglage (13) prenant appui sur la face inférieure de la table (5), un détecteur (4) étant solidarisé au bras (12) par un pivot entre les deux extrémités dudit bras (12) qui est maintenu dans sa position initiale de repos par un ressort (14) dont les extrémités sont respectivement fixées à ladite face inférieure et au bras (12).

6. Dispositif selon l'une quelconque des revendications précédentes **caractérisé en ce que** l'enclume (8) comprend un revêtement souple (29) sur sa face supérieure afin d'absorber une partie de l'énergie transmise par les marteaux (9) lors du planage.

7. Dispositif selon l'une quelconque des revendications précédentes **caractérisé en ce que** les moyens d'entraînement de chaque marteau (9) sont constitués d'une roue (15) entraînée en rotation autour d'un axe B globalement perpendiculaire à la direction de défilement de la lame (2), comprenant à sa périphérie des logements radiaux (16) dans lesquels sont positionnés des taquets (18) aptes à occuper une première position de repos où ils sont à l'intérieur des logements (16) et une seconde position d'entraînement où ils font saillie à la périphérie de la roue (15) pour entraîner en translation le marteau (9), suivant l'axe vertical, en coopérant avec une excroissance (24) solidaire du marteau (9) jusqu'à ce que le taquet (18) soit ramené dans sa première position par des moyens de retour, libérant ainsi le marteau (9) qui tombe sous l'effet de son propre poids sur la lame (2), avant de revenir en position initiale de repos au-dessus de la lame (2) par les moyens de rappel, prêt pour une nouvelle frappe.

8. Dispositif selon la revendication 7 **caractérisé en ce qu'**il comprend pour chaque détecteur (4) une bobine électromagnétique (19) commandée par ledit détecteur (4), dont la tige (20) est articulée à une première extrémité d'un "bras pivotant" (21) muni à son autre extrémité d'un galet (22) coopérant avec des roulettes (23) solidaires de chaque taquet (18) d'une roue (15) pour amener lesdits taquets (18) depuis leur première position de repos jusqu'à leur seconde position d'entraînement en saillie à la périphérie de la roue (15).

9. Dispositif selon l'une quelconque des revendications 7 ou 8 **caractérisé en ce que** les moyens de retour des taquets (18) de chaque roue (15) sont obtenus par un levier (25) dont une extrémité est centrée sur l'axe de rotation B de la roue (15) et l'autre est réglable angulairement par des moyens appropriés, ledit levier (25) étant muni d'un chemin de came (26) coopérant avec les roulettes (23) des taquets (18) pour les amener depuis leur seconde position d'entraînement jusqu'à leur première position de repos.

10. Dispositif selon l'une quelconque des revendications précédentes **caractérisé en ce que** la tête de chaque marteau (9) est bombée.

## Patentansprüche

1. Vorrichtung zum Richten eines Bandsägeblattes (2) oder Ähnliches, die Mittel zum ununterbrochenen Antrieb (1) des Blattes (2) umfassen, die seine flache Positionierung zumindest unter einem Arbeitsbereich garantieren, Mittel zur Erfassung (3) von Verformungen des Blattes (2) und Mittel zum Richten (6) in dem Arbeitsbereich, die unter den besagten Erfassungsmittel (3) positioniert sind, **dadurch gekennzeichnet, dass** die Erfassungsmittel (3) aus Lagefühlern (4) bestehen, die fest mit einem Tisch (5) verbunden sind, der unter dem Blatt (2) positioniert ist und zwar so, dass die Köpfe der besagten Fühler (4) sich deutlich im Bereich der Oberseite des Tisches (5) befinden, rechts von der Unterseite des Blattes (2), wobei sich die besagten Fühler (4) mit einem regelmäßigen Zwischenraum auf einer Linie, quer zur Laufrichtung des Blattes (2) angeordnet sind und **dadurch**, dass die Richtmittel (6) aus Hammern (9) bestehen, die mit einem Amboss (8) zusammenarbeiten, der unter dem Sägeblatt (2) angeordnet ist, vorzugsweise in der gleichen Anzahl, wie die Fühler (4) und bestehend aus vorzugsweise parallelepipedischen Bolzen, die sich senkecht zum Blatt (2), rechts vom Amboss (8) erstrecken und in ihrer Ruhelage, über dem Blatt (2) durch Rücklaufmittel(27) gehalten werden, die dem Blatt ermöglichen, zwischen dem Amboss (8) und den Köpfen der Hammer (9) vorbeizulaufen, wobei letztere in einem regelmäßigen Abstand in der Achse der Fühler (4) angeordnet sind und von mechanischen Antriebsmitteln in Bewegung gesetzt werden, die entsprechend von den Lagefühlern (4) so gesteuert werden, dass, wenn ein Fühler (4) eine Verformung der Fläche des Körpers des Sägeblattes (2) nachweist, der Hammer (9), der zu dem besagten Fühler (4) gehört, in Bewegung gesetzt wird, um die besagte Verformung zu planieren.

2. Vorrichtung gemäß dem vorherigen Anspruch, **dadurch gekennzeichnet, dass** der Tisch (5) auf seiner Oberseite, gegenüber der Unterseite des Blattes (2) Nuten (10) oder Ähnliches umfasst.

3. Vorrichtung gemäß Anspruch 2, **dadurch gekennzeichnet, dass** die Nuten (10) parallel zu der Laufrichtung des Blattes (2) verlaufen.

4. Vorrichtung gemäß einem der Ansprüche 1 bis 3, **dadurch gekennzeichnet, dass** der Tisch (5) Mittel zur Positionierung des Kopfes jedes Fühlers (4) umfasst, im Vergleich zu der Oberseite des besagten Tischs (5).

5. Vorrichtung gemäß Anspruch 4, **dadurch gekennzeichnet, dass** die Regelungsmittel aus einem Arm (12) bestehen, dessen erstes Ende um eine Achse A schwenkt, die fest mit dem Tisch (5) verbunden ist und dessen anderes Ende eine Stellschraube (13) umfasst, die sich auf die Unterseite des Tisches (5) stützt, einen Fühler (4), der fest mit dem Arm (12) verkeilt ist, durch einen Zapfen zwischen den beiden Enden des besagten Armes, der in seiner anfänglichen Ruhelage gehalten wird, durch eine Feder (14) deren Enden entsprechend mit der besagten Unterseite und dem Arm (12) befestigt sind.

6. Vorrichtung gemäß einem der vorherigen Ansprüche, **dadurch gekennzeichnet, dass** der Amboss (8) einen weichen Überzug (29) auf seiner Oberseite umfasst, um einen Teil der Energie zu absorbieren, die von den Hammern (9) während dem Richten übertragen wird.

7. Vorrichtung gemäß einem der vorherigen Ansprüche, **dadurch gekennzeichnet, dass** die Antriebsmittel jedes Hammers (9) aus einem Rad (15) bestehen, das um eine Achse B gedreht wird, insgesamt senkrecht zur Laufrichtung des Blattes (2) und auf ihrem Umfang radiale Aufnahmen (16) umfasst, in denen Keile (18) positioniert sind, die eine erste Ruhelage einnehmen können, wo sie sich in den Aufnahmen (16) befinden und eine zweite Antriebsposition, wo sie über den Umfang des Rades (15) überstehen, um den Hammer (9) seitlich zu verschieben, gemäß der senkrechten Achse, in Zusammenarbeit mit einer Ausstülpung (24), die fest mit dem Hammer (9) verbunden ist, bis der Keil (18) in seine erste Position zurückgeführt wird, durch Rückführungsmittel und der Hammer (9) **dadurch** freigegeben wird, der unter der Wirkung seines eigenen Gewichtes auf das Blatt (2) fällt, bevor er durch die Rückführungsmittel in seine anfängliche Ruhelage, über dem Blatt (2), zurückkehrt und für einen neuen Schlag bereit ist.

8. Vorrichtung gemäß Anspruch 7, **dadurch gekennzeichnet, dass** sie für jeden Fühler (4) eine elektromagnetische Spule (19) umfasst, die von dem besagten Fühler (4) gesteuert wird, dessen Schaft (20) gelenkig mit einem ersten Ende eines "Schwenkarms" (21) verbunden ist, der an seinem anderen Ende mit einer Laufrolle (22) versehen ist, die mit den Rädchen (23) zusammenarbeitet, die fest mit jedem Keil (18) eines Rades (15) verbunden sind, um die besagten Keile (18) aus ihrer ersten Ruhelage bis zur zweiten Antriebsposition zu bringen, überstehend auf dem Umfang des Rades (15).

9. Vorrichtung gemäß einem der Ansprüche 7 oder 8, **dadurch gekennzeichnet, dass** die Rückführungsmittel der Keile (18) jedes Rades (15) von einem Hebel (25) aufgenommen werden, dessen eines Ende auf der Drehachse B des Rades (15) zentriert ist und das andere winkelig durch geeignete Mittel regelbar ist, wobei der besagte Hebel (25) mit einem Schlosskanal (26) versehen ist, der mit den Rädchen (23) der Keile (18) zusammenarbeitet, um sie von ihrer zweiten Antriebsposition bis zu ihrer ersten Ruhelage zu bringen.

10. Vorrichtung gemäß einem der vorherigen Ansprüche, **dadurch gekennzeichnet, dass** der Kopf jedes Hammers (9) gewölbt ist.

## Claims

1. Device for flattening a band-saw blade (2) or similar, comprising means for continuous driving (1) of the blade (2) ensuring its plane position at least under a work zone, means for detecting distortion (3) on the blade (2) and means for flattening (6) in the work zone located downstream of said means for detecting (3) **characterised in that** the means for detecting (3) is constituted of position sensors (4) integrated onto a table (5) located under the blade (2) so that the heads of said sensors (4) are substantially in the vicinity of the upper face of the table (5) to the right of the lower face of the blade (2), said sensors (4) being evenly arranged on a transversal line in the moving direction of the blade (2), and **in that** the means for flattening (6) is constituted of hammers (9) operating with an anvil (8) located under the saw blade (2), preferably as numerous as there are sensors (4) and constitute bars, preferably parallelepipedal, extending in a perpendicular manner to the blade (2) to the right of the anvil (8) and held in their inactive position above the blade (2) by drawback means (27) allowing the blade to move between the anvil (8) and the hammer heads (9), the latter being evenly arranged along the axis of the sensors (4) and actuated by respective means for mechanical driving controlled by the position sensors (4) so that, when the sensors (4) detect distortion on the surface of the blade (2), the hammer (9) corresponding to said sensor (4) is actuated to flatten out the distortion.

2. Device set forth in the previous claim, **characterised in that** the table (5) comprises on its upper face, opposite the lower face of the blade (2), grooves (10) or similar.

3. Device set forth in claim 2, **characterised in that** the grooves (10) extend in a parallel manner to the moving direction of the blade (2).

4. Device set forth in any one of claims 1 to 3, **characterised in that** the table (5) comprises means for positioning the head of each sensor (4) in relation to the upper surface of said table (5).

5. Device set forth in claim 4, **characterised in that** the means for setting is constituted of an arm (12) of which one end pivots about an axis A integral with the table (5) and of which the other end comprises an adjustment screw (13) in contact with the lower face of the table (5), a sensor (4) being integral with the arm (12) via a pivot between the two ends of said arm (12) which is held in its initial inactive position by a spring (14) whose ends are respectively attached to said lower face of the arm (12).

6. Device set forth in any one of the previous claims, **characterised in that** the anvil (8) comprises a flexible coating (29) over its upper face in order to absorb some of the energy transmitted by the hammers (9) during flattening.

7. Device set forth in any one of the previous claims, **characterised in that** the means for driving each hammer (9) is constituted of a wheel (15) rotated about an axis B globally perpendicular to the moving direction of the blade (2), comprising radial cavities (16) on its periphery in which trip-over stops (18) are placed capable of occupying a first inactive position where they are inside the cavities (16) and a second driving position where they project beyond the periphery of the wheel (15) in order to drive the hammer (9) in translation, along the vertical axis, functioning with a projection (24) integral with the hammer (9) until the trip-over stop (18) is returned to its first position by the drawback means, thus freeing the hammer (9) which falls by means of its own weight onto the blade (2), before returning to its initial inactive position above the blade (2) via the drawback means, ready to strike again.

8. Device set forth in claim 7, **characterised in that** for each sensor (4) it comprises an electromagnetic coil (19) controlled by said sensor (4), whose rod (20) is articulated on a first end of a "pivoting arm" (21) fitted at its other end to a roller (22) operating with the caster (23) integral with each trip-over stop (18) of a wheel (15) in order to move said trip-over stops (18) from their first inactive position to their second drive position projecting beyond the periphery of the wheel (15).

9. Device set forth in any one of claims 7 or 8, **characterised in that** the drawback means of the trip-over stops (18) of each wheel (15) is obtained via a lever (25) of which one end is centred on the axis of rotation B of the wheel (15) and the other end is angularly adjustable via appropriate means, said lever (25) is equipped with a cam groove (26) functioning with the castors (23) of the trip-over stops (18) in order to move them from their second drive position to their first inactive position.

10. Device set forth in any one of the previous claims, **characterised in that** the head of each hammer (9) is dome-shaped.
